# EUROPEAN PATENT SPECIFICATION

(11) **EP 3 381 714 B1**
(45) Date of publication and mention of the grant of the patent: **28.08.2019**
(21) Application number: 18164797.5
(22) Date of filing: 28.03.2018
(51) Int. Cl.: B60C 9/22, B60C 9/00

(54) **MOTORCYCLE TIRE**
MOTORRADREIFEN
PNEU DE MOTO

(30) Priority: 30.03.2017 JP 2017067116
(43) Date of publication of application: 03.10.2018
(73) Proprietor: Sumitomo Rubber Industries, Ltd., Kobe-shi Hyogo-ken (JP)
(72) Inventor: YAMAGUCHI, Eiji, Kobe-shi, Hyogo (JP)
(74) Representative: Manitz Finsterwald Patent- und Rechtsanwaltspartnerschaft mbB

(56) References cited:
- EP-A1- 1 486 354
- EP-A1- 2 607 104
- EP-A1- 2 777 948

## Description

### Technical field

The present invention relates to a motorcycle tire, more particularly to a tread reinforcing band capable of improving durability of the tire while ensuring good handling stability.

### Background art

There has been proposed a motorcycle tire provided with a band employing a steel cord in order to improve the cornering performance while maintaining good high-speed stability during straight running. General possible embodiments of such tires with a steel band cord are for instance disclosed in EP 2 0607 104 A1.

Here, the band means a tread reinforcing cord layer in which the angle of the reinforcing cord(s) with respect to the tire circumferential direction is relatively small, for example, less than 10 degrees, usually, less than about 5 degrees.

When a steel cord is used as a cord of such a tread reinforcing band of a motorcycle tire, as the compressive stiffness of the steel cord is high, there is a possibility that buckling occurs on the band cord when manufacturing the motorcycle tire. The radius of curvature of the tread of a motorcycle tire is relatively small and the outer diameter of the tire becomes small on the tread edge sides as compared with on the tire equatorial side. Thus, due to the difference in the tire outer diameter, when the tread edge sides of a raw strip of a band material are applied down to the underlying structure such as carcass, the band cord on the tread edge sides is subjected to a compressive force. If the band cord is high in the compressive stiffness and when it can be no longer compressed in the longitudinal direction, buckling occurs. Such buckling reduces the durability of the band cord during running due to compression fatigue.

Japanese Patent Application Publication No. 2013-139165 discloses a motorcycle tire provided with a band formed by spirally winding band cords. Thus, a raw strip of a band material to be applied down to the underlying structure is not used, and accordingly, the occurrence of buckling during tire manufacturing may be avoided. In this Publication, in order to prevent undulation of the band to improve handling stability, the band cord is made up of five steel filaments having the same diameter of 0.2 mm and twisted together into a 1x5x0.2 structure, wherein the five steel filaments include a shaped filament, and the band cord has a compressive stiffness of from 200 to 400 N/mm. In such tire, however, during cornering at relatively large lean angles such that an edge portion of the tread contact with the ground, there is still a possibility of buckling. Thus, it has room for improvement in the prevention of buckling of the band cord.

### Summary of the invention

It is therefore, an object of the present invention to provide a motorcycle tire in which, by suppressing the occurrence of buckling, the durability is improved without sacrificing the handling stability.

According to the present invention, a motorcycle tire comprises
a carcass extending between a pair of bead portions through a tread portion and a pair of sidewall portions, and
a band disposed radially outside the carcass in the tread portion, wherein
the band is composed of a ply of a spirally wound steel band cord, and
the steel band cord has a compressive stiffness of not more than 500 N/mm, a bending rigidity of not more than 15.0 g cm, and an elongation percentage at a load of 49N of 0.5% to 2.5%,
wherein the steel band cord is made up of a number of steel filaments twisted together and includes at least one shaped steel filament,
wherein a diameter (d) of each steel filament is set in a range from 0.15 mm to 0.25 mm,
wherein a number of the final twist is set in a range from 8 to 12 turns/10 cm,
wherein a shaping height is set in a range from 0.15 mm to 0.25 mm, and
wherein a shaping pitch length is set in a range from 2.5 to 5.0 mm.

It is preferable that the steel band cord has a 1x4 twist structure in which four steel filaments including at least one shaped filament are twisted together.

### Brief description of the drawings

Fig. 1 is a sectional view showing a motorcycle tire as an embodiment of the present invention.
Fig. 2 is a perspective view showing a band strip.
Fig. 3 is a cross-sectional view showing an example of a band cord.
Fig. 4 is a side view conceptually showing a shaped steel filament.
Fig. 5(A) is a diagram showing a specimen of the band cord used for measuring the compressive stiffness.
Fig. 5(B) is a graph showing a load-compression amount curve of a band cord.
Fig. 6 is a diagram for explaining a method of measuring the bending rigidity of a cord.

### Description of the Preferred Embodiments

Embodiments of the present invention will now be described in detail in conjunction with accompanying drawings.

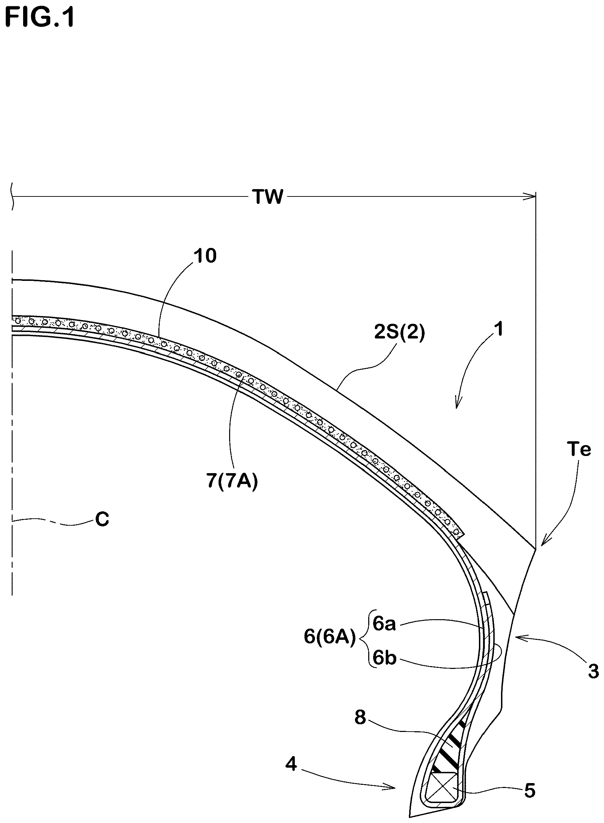

According to the present invention, motorcycle tire 1 comprises, as shown in Fig. 1, a tread portion 2, a pair of axially spaced bead portions 4 each with a bead core 5 therein, a pair of sidewall portions 3 extending between the tread edges and the bead portions, a carcass 6 extending between the bead portions 4 through the tread portion 2 and the sidewall portions 3, and a tread reinforcing band 7 disposed radially outside the carcass 6 in the tread portion 2.

As a characteristic of a motorcycle tire, the tread portion 2 (inclusive of the carcass 6, band 7 and a tread rubber thereon) is convexly curved so that the tread face 2s between the tread edges Te is curved like an arc swelling radially outwardly, and the maximum cross sectional width of the tire 1 occurs between the tread edges Te, namely, equals to the axial tread width TW.

The carcass 6 is composed of at least one ply of cords arranged radially at an angle in a range from 60 to 90 degrees with respect to the tire circumferential direction. In this embodiment, the carcass 6 is made up of a single ply 6A. As to the carcass cords, organic fiber cords, e.g. nylon, polyester, rayon and the like are preferably employed.

The carcass ply 6A extends between the bead portions 4 through the tread portion 2 and the sidewall portions 3, and in this embodiment, it is turned up around the bead core 5 in each bead portion 4 from the axially inside to the axially outside of the tire so as to form a pair of turnup portions 6b and a main portion 6a therebetween.

Between the main portion 6a and the turnup portion 6b in each bead portion 4, there is disposed a bead apex rubber 8 extending radially outwardly from the bead core 5 in a tapered manner to reinforce the bead portion.

The band 7 is composed of at least one band cord 10 wound spirally in the tire circumferential direction.

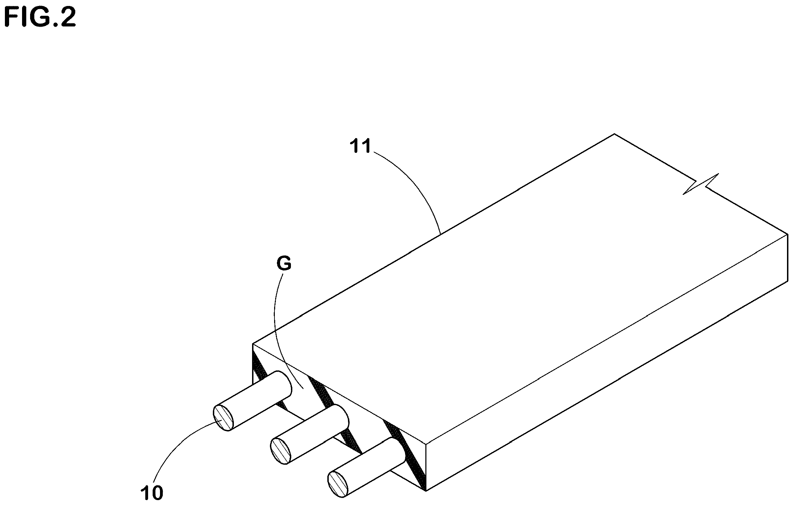

In this embodiment, the above-said at least one band cord 10 is wound into a single ply 7A. The band ply 7A is formed by spirally winding a band strip 11. As shown in Fig. 2, the band strip 11 is a long narrow strip of raw topping rubber G in which a single cord 10 or parallel cords 10 are embedded along the length thereof.

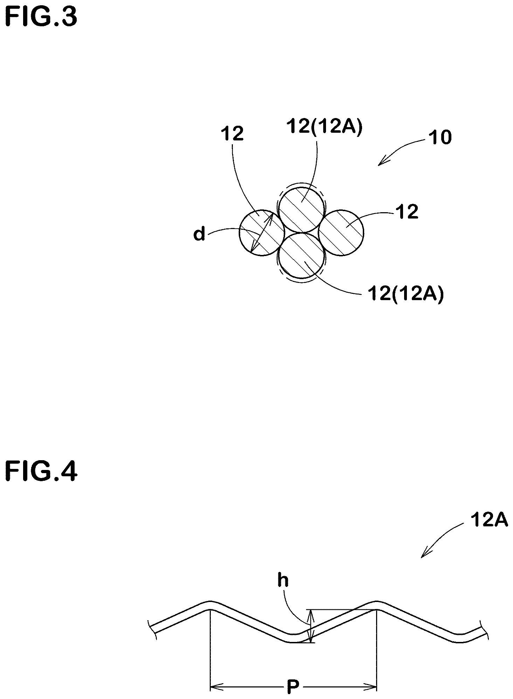

Each of the band cords 10 is a steel cord made up of a number (N) of steel filaments 12 twisted together.
As to the twist structure, it is possible to employ
a single-twisted cord represented as a 1xN structure wherein the number (N) of the steel filaments 12 are final twisted into the cord, as well as
a multi-twisted cord represented as a m x n structure (m > 1, m + n = N) wherein the number (n) of strands, each of which is formed by first twisting the number (m) of the steel filaments 12, are final twisted into the cord.
For example, 1x4 structure shown in Fig. 3, 1x5 structure, 3x3 structure and the like can be employed.

In any case, the number (N) of the steel filaments 12, which are to be twisted into the cord, include at least one shaped steel filament 12A. The shaped steel filament 12A is shaped into a nonlinear shape before being twisted.
Fig. 4 exaggeratingly shows an example of the shaped steel filament 12A. This example is shaped into a two-dimensional waved shape repeating mountains and valleys in a plane, in particular a zigzag shape.

According to the present invention, the band cord 10 is configured to have a compressive stiffness of not more than 500 N/mm, a bending rigidity of not more than 15.0 g cm, and an elongation percentage at a load of 49N of not less than 0.5% and not more than 2.5%.

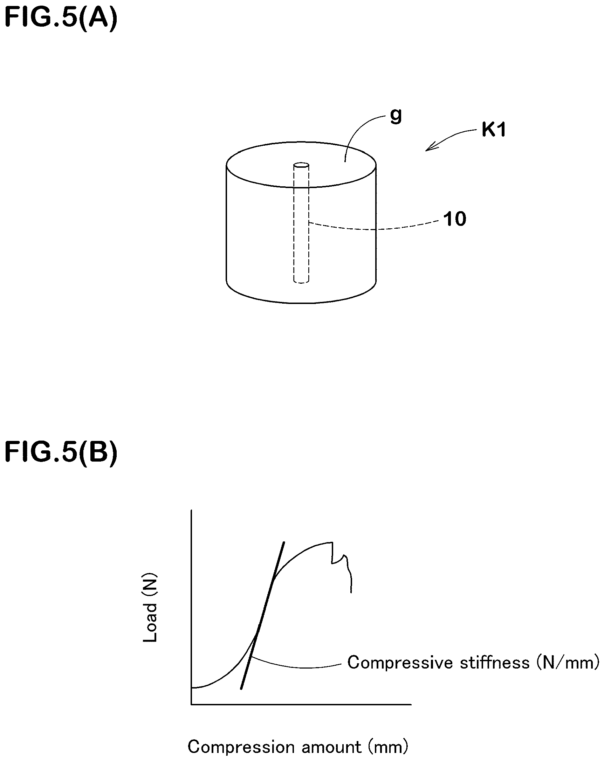

The compressive stiffness is measured as follows.
First, two cylindrical rubber blocks (g) having a diameter of 25 mm and a height of 25 mm are prepared. One of the rubber blocks used as a specimen K1 has the band cord 10 cut into 25 mm long which is embedded along the center axis of the cylindrical shape of the blocks extending in the height direction as shown Fig. 5(A). The other rubber block without the band cord 10 is used as a control K2 (not shown). The rubber blocks K1 and K2 are vulcanized at a temperature of 165 degrees C for a vulcanizing time of 18 minutes.

Then, using a testing machine, each block K1, K2 is compressed in the height direction at a rate of 2.0 mm/min, while measuring the compression load and the amount of compression. The measurement data of the specimen K1 is corrected by the use of the measurement data of the control K2, and the load-compression curve of the cord 10 as shown in Fig. 5(B) is obtained. From the gradient of a middle part of the obtained curve, the compressive stiffness (N/mm) is determined.

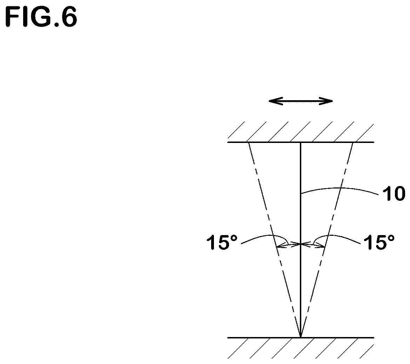

The bending rigidity is determined as follows.
Both ends of the band cord 10 are clamped so that the length of the band cord therebetween becomes 145 mm, for example, using a stiffness Tester (e.g. 150-D type) manufactured by TABER Inc. (USA). Then, as shown in Fig. 6, the band cord 10 is bent by +15 degrees (toward one side) and -15 degrees (toward the other side), while measuring the bending moments at the respective angles. From the measured bending moments at +15 degrees and - 15 degrees, the bending rigid (g cm) is determined as the average thereof.

The elongation percentage at a load of 49N is determined by applying a tensile load of 49N to the cord 10, and measuring the elongation in %.

The compressive stiffness, the bending rigidity and the elongation percentage of the band cord 10 can be adjusted by changing the number of the twist, the diameter d of each steel filament 12, the number N of the steel filaments 12, the number of the shaped filament(s) 12A, the shaping heights h (shown in Fig. 4), and the shaping pitch lengths P (shown in Fig. 4). For example, (A) by increasing the number of twist, the compressive stiffness is reduced, the bending rigidity is reduced, and the elongation percentage are increased.
(B) by increasing the number of the steel filaments 12, the compressive stiffness is increased, the bending rigidity is increased, and the elongation percentage is reduced.
(C) by increasing the diameter d of the steel filament 12, the compressive stiffness is increased, the bending rigidity is increased, and the elongation percentage is reduced.
(D) by increasing the number of shaped filament 12A, the compressive stiffness is reduced, the bending rigidity is increased, and the elongation percentage is increased.
(E) by increasing the shaping height h, the compressive stiffness is reduced, the bending rigidity is increased, and the elongation percentage is increased.
(F) by increasing the shaping pitch lengths P, the compressive stiffness is increased, the bending rigidity is decreased, and the elongation percentage is reduced.

As to the twist structure, 1 x 4 structure, 1 x 5 structure, and 3 x 3 structure are preferred. Especially, 1 x 4 structure is preferred from the viewpoint of balance between the compressive stiffness and the bending rigidity.

As to the number of the twist (final twist), it is set in a range from 8 to 12 turns/10 cm from the viewpoint of the strength and fatigue resistance of the cord.

As to the diameter (d) of each steel filament 12, it is set in a range from 0.15 to 0.25 mm from the viewpoint of the strength and rigidity of the cord.

As to the shaping height h, it is set in a range from 0.15 to 0.25 mm from the viewpoint of the rubber penetration into the cord and the stiffness of the cord.

As to the shaping pitch lengths P, it is set in a range from 2.5 to 5.0 mm from the viewpoint of the rubber penetration into the cord and the stiffness of the cord.

As describe above, as the compressive stiffness of the band cord 10 is not more than 500 N/mm, the compressive stress on the steel filaments 12 is easily dispersed, and the occurrence of buckling is suppressed, and thereby it is possible to improve the resistance to compression fatigue. On this occasion, as the bending rigidity is not more than 15.0 g cm, the direction of the compressive stress turns toward a bending direction of the steel filaments 12, therefore, the compressive stress of the steel filaments 12 is further reduced. Thus, it is possible to increase the resistance to the compression fatigue resistance.

As explained above, the compressive stress partly turns to a bending stress on the steel filaments 12. However, as the steel filaments (12) are excellent in the resistance to bending fatigue, and further the band cord 10 is supple and excellent in the bending fatigue resistance owing to the bending rigidity set in the range of not more than 15.0 g cm, it is possible to increase the resistance to compression fatigue to improve the durability of the tire, while suppressing the disadvantage of the increased stress in the bending direction on the durability.

Further, as the band cord 10 has an elongation percentage of not more than 2.5% at the cord load of 49N, it is possible to maintain good handle responsiveness. Furthermore, as the elongation percentage is not less than 0.5%, it is possible to maintain good road grip performance. Accordingly, excellent maneuverability can be obtained.

If the compressive stiffness exceeds 500 N/mm, there is a possibility that the compression fatigue resistance becomes insufficient, and the band cord 10 is damaged during running, therefore, the durability of the tire is reduced. If the compressive stiffness is too low, the tire lacks a sense of rigidity, and the handling stability is decreased. From such point of view, the compressive stiffness is preferably not less than 200 N/mm, more preferably not less than 300 N/mm, and preferably not more than 450 N/mm.

If the bending rigidity exceeds 15.0 g cm, the bending fatigue resistance is reduced, and the effect of improving the compression fatigue resistance is also reduced. As a result, the band cord 10 becomes liable to be damaged during running, and thereby the durability of the tire is reduced. If the bending rigidity is too low, the tire lacks a sense of rigidity, and the handling stability is decreased. From such point of view, the bending rigidity is preferably not less than 5.0 g cm, more preferably not less than 8.0 g cm, and preferably not more than 14.5 g cm.

If the elongation percentage of the cord exceeds 2.5%, then the handle responsiveness becomes insufficient. If the elongation percentage is less than 0.5%, the length of the ground contacting area of the tire becomes reduced, and the road grip performance becomes insufficient.
In either case, the handling stability is deteriorated.
From such viewpoint, the elongation percentage of the cord is preferably not more than 2.0%, and preferably not less than 0.8%.

It is preferable that the band 7 has a cord count in a range from 30 to 45 ends/5 cm width in the widthwise direction of the band 7.

The motorcycle tire 1 may be provided between the band 7 and the carcass 6 with a belt ply if necessary. The belt ply is a ply of parallel belt cords arranged at a relatively small angle with respect to the tire circumferential direction, for example in a range from 10 to 60 degrees. As to the belt cords, organic fiber cords and steel cords may be employed as appropriate.
while detailed description has been made of a preferable embodiment of the present invention, the present invention can be embodied in various forms without being limited to the illustrated embodiment.

### Comparison tests

In order to confirm the advantageous effects of the present invention, motorcycle tires of size 190/50ZR17 (for Rear wheel) having the internal structure shown in Fig. 1 were experimentally manufactured and tested for the durability and handling stability.
The test tires had same specifications except for the band cords whose specifications are listed in Table 1.
Common specifications are as follows.
Carcass: a single ply of 1880 dtex/2 rayon cords (cord count 50 ends/5 cm width)
Band: a single ply of band cords (cord count 36 ends/5 cm width) Steel filaments' material: high carbon steel wires

### (1) Durability test:

Each test tire was mounted on a rim (size MT6.00x17) and inflated to 200 kPa, and run at a speed of 80 km/h under a load of 7.0 KN at a lean angle of 45 degrees using a tire test drum, wherein the drum was provided on its outer surface with four protrusions at intervals in the circumferential direction, each protrusion having a cross sectional shape of a 0.5 inch radius semicircle. After running for 10,000 km, the tire was cut open inspected for checking the occurrence of cord breakage.

The results are indicated in Table 1 wherein
"O" denotes that cord breakage was not occured, and
"X" denotes that cord breakage was occured.

### (2) Handling stability test:

Each test tire mounted on a rim of size MT6.00x17 and inflated to 200 kPa was attached to a 1000 cc motorcycle as the rear wheel, and run on a dry asphalt road of a tire test course.

And during running at a speed of 120 km/h, the handling stability when changing the lane was evaluated by the test rider into three ranks, wherein rank 1 is bad and not acceptable, rank 3 is good and acceptable, and rank 2 is middle and not acceptable.

**Table 1**

| Tire | Ex1 | Ex.2 | Ex.3 | Ex.4 | Ex.5 | Ex.6 | Ex.7 | Ex.8 | Ref. 1 | Ref.2 | Ref.3 | Ref.4 | Ref.5 |
|---|---|---|---|---|---|---|---|---|---|---|---|---|---|
| Band cord | | | | | | | | | | | | | |
| compressive stiffness (N/mm) | 350 | 250 | 450 | 200 | 500 | 400 | 500 | 200 | 520 | 300 | 250 | 550 | 350 |
| bending rigidity (g cm) | 10.0 | 5.0 | 14.5 | 5.0 | 13.0 | 15.0 | 15.0 | 5.0 | 10.0 | 9.5 | 4.5 | 16.5 | 6.5 |
| elongation % at 49N | 1.25 | 2.35 | 0.65 | 1.55 | 1.00 | 0.80 | 0.50 | 2.50 | 0.35 | 2.65 | 2.55 | 0.55 | 0.30 |
| twist structure | 1x4 | 1x4 | 1x5 | 3x3 | 1x4 | 1x4 | 1x5 | 1x4 | 1x4 | 1x4 | 1x4 | 1x5 | 3x3 |
| twist (turns/10cm) | 10 | 10 | 10 | 8 | 8 | 10 | 8 | 12 | 20 | 10 | 6 | 15 | 10 |

| steel filaments | | | | | | | | | | | | | |
|---|---|---|---|---|---|---|---|---|---|---|---|---|---|
| diameter (mm) | 0.21 | 0.17 | 0.20 | 0.17 | 0.21 | 0.23 | 0.25 | 0.15 | 0.21 | 0.21 | 0.17 | 0.20 | 0.17 |

| shaped filament | | | | | | | | | | | | | |
|---|---|---|---|---|---|---|---|---|---|---|---|---|---|
| number | 1 | 1 | 2 | 6 | 1 | 1 | 2 | 1 | 0 | 4 | 1 | 0 | 0 |
| shaping height h (mm) | 0.20 | 0.20 | 0.25 | 0.15 | 0.15 | 0.20 | 0.25 | 0.15 | - | 0.35 | 0.30 | - | - |
| shaping pitch lengths P (mm) | 3.0 | 3.0 | 2.5 | 2.5 | 5.0 | 3.0 | 2.5 | 5.0 | - | 2.0 | 2.0 | - | - |
| durability | O | O | O | O | O | O | O | O | X | O | O | X | O |
| handling stability | 3 | 3 | 3 | 3 | 3 | 3 | 3 | 3 | 1 | 2 | 2 | 3 | 2 |

As shown in Table 1, it was confirmed that the tires according to the present invention can be improved in the durability by preventing the breakage of the band cords while securing excellent handling stability.

### Description of the reference signs

1 motorcycle tire
2 tread portion
3 sidewall portion
4 bead portion
5 bead core
6 carcass
7 band
7A band ply
10 band cord
12 steel filament
12A shaped filament

## Claims

1. A motorcycle tire (1) comprising:
a carcass (6) extending between a pair of bead portions (4) through a tread portion (2) and a pair of sidewall portions (3), and
a band (7) disposed radially outside the carcass (6) in the tread portion (2), wherein the band (7) is composed of a ply (7A) of a spirally wound steel band cord (10),
**characterised in that**
the steel band cord (10) has a compressive stiffness of not more than 500 N/mm, a bending rigidity of not more than 15.0 g cm, and an elongation percentage at 49N of 0.5% to 2.5%,
wherein the steel band cord (10) is made up of a number (N) of steel filaments (12) twisted together and includes at least one shaped steel filament (12A),
wherein a diameter (d) of each steel filament (12, 12A) is set in a range from 0.15 mm to 0.25 mm,
wherein a number of the final twist is set in a range from 8 to 12 turns/10 cm,
wherein a shaping height (h) is set in a range from 0.15 mm to 0.25 mm, and
wherein a shaping pitch length (P) is set in a range from 2.5 to 5.0 mm.

2. The motorcycle tire (1) according to claim 1, wherein
the steel band cord (10) has a 1x4 twist structure in which four steel filaments (12, 12A) including at least one shaped filament (12A) are twisted together.

## Patentansprüche

1. Motorradreifen (1), umfassend:
eine Karkasse (6), die sich zwischen einem Paar Wulstabschnitten (4) durch einen Laufflächenabschnitt (2) und ein Paar Seitenwandabschnitte (3) erstreckt, und
ein Band (7), das radial außerhalb der Karkasse (6) in dem Laufflächenabschnitt (2) angeordnet ist, wobei das Band (7) aus einer Lage (7A) eines spiralförmig gewickelten Stahlbandkords (10) besteht,
**dadurch gekennzeichnet, dass**
der Stahlbandkord (10) eine Drucksteifigkeit von nicht mehr als 500 N/mm, eine Biegesteifigkeit von nicht mehr als 15,0 g cm und einen Dehnungsprozentsatz bei 49N von 0,5% bis 2,5% aufweist,
wobei der Stahlbandkord (10) aus einer Anzahl (N) von miteinander verdrehten Stahlfilamenten (12) besteht und mindestens ein geformtes Stahlfilament (12A) umfasst,
wobei ein Durchmesser (d) jedes Stahlfilaments (12, 12A) in einem Bereich von 0,15 mm bis 0,25 mm festgelegt ist,
wobei eine Zahl der Endverdrehung in einem Bereich von 8 bis 12 Windungen/10 cm festgelegt ist,
wobei eine Formhöhe (h) in einem Bereich von 0,15 mm bis 0,25 mm festgelegt ist, und
wobei eine Formteilungslänge (P) in einem Bereich von 2,5 bis 5,0 mm festgelegt ist.

2. Motorradreifen (1) nach Anspruch 1, wobei der Stahlbandkord (10) eine 1x4-Verdrehungsstruktur aufweist, bei der vier Stahlfilamente (12, 12A), die mindestens ein geformtes Filament (12A) umfassen, miteinander verdreht sind.

## Revendications

1. Bandage pneumatique pour motocyclette (1) comprenant :
une carcasse (6) s'étendant entre une paire de portions formant talon (4) à travers une portion formant bande de roulement (2) et une paire de portions formant paroi latérale (3), et
une bande (7) disposée radialement à l'extérieur de la carcasse (6) dans la portion formant bande de roulement (2), dans lequel la bande (16) est composée d'une nappe (7A) consistant en un câblé de bande en acier enroulé en spirale (10),
**caractérisé en ce que**
le câblé de bande en acier (10) a une raideur à la compression qui n'est pas supérieure à 500 N/mm, une rigidité en flexion qui n'est pas supérieure à 15,0 g cm, et un pourcentage d'élongation à 49 N de 0,5 % à 2,5 %,
dans lequel le câblé de bande en acier (10) est fait à partir d'un nombre (N) de filaments en acier (12) torsadés ensemble, et inclut au moins un filament en acier conformé (12A),
dans lequel un diamètre (d) de chaque filament en acier (12, 12A) est défini dans une plage allant de 0,15 mm à 0,25 mm,
dans lequel un nombre final de torsades est défini dans une plage allant de 8 à 12 tours/10 cm,
dans lequel une hauteur de conformation (h) est définie dans une plage allant de 0,15 mm à 0,25 mm, et
dans lequel une longueur de pas de conformation (P) est définie dans une plage allant de 2,5 mm à 5,0 mm.

2. Bandage pneumatique pour motocyclette (1) selon la revendication 1, dans lequel
le câblé de bande en acier (10) a une structure en torsades de 1x4 dans laquelle quatre filaments en acier (12, 12A) incluant au moins un filament conformés (12A) sont torsadés ensemble.
